# FASCICULE DE BREVET EUROPEEN

(11) **EP 2 314 150 B1**
(45) Date de publication et mention de la délivrance du brevet: **07.02.2018**
(21) Numéro de dépôt: 10188432.8
(22) Date de dépôt: 21.10.2010
(51) Int. Cl.: A01F 29/00, A01F 29/10

(54) **Machine destinée à déstructurer et à distribuer une matière**
Vorrichtung zum Zerkleinern und Verteilen von Materialballen
Device for disintigrating and distributing of bales

(30) Priorité: 21.10.2009 FR 0957375
(43) Date de publication de la demande: 27.04.2011
(73) Titulaire: Etablissements Emily, 29800 Treflevenez (FR)
(72) Inventeur: Rungoat, David, 29800, Treflevenez (FR)
(74) Mandataire: Le Guen-Maillet

(56) Documents cités:
- EP-A1- 0 993 765
- DE-A1- 2 618 942
- DE-C- 483 309
- US-A- 5 833 533
- US-A1- 2005 077 404

## Description

La présente invention concerne une machine destinée à déstructurer et à distribuer une matière préalablement comprimée comme, par exemple, une balle de fourrage. Dans cette application, la machine est communément appelée une pailleuse.

Dans ce type de machine, on utilise un moyen pour défaire la structure comprimée de la balle, qu'elle soit cylindrique ou parallélépipédique, et pour éjecter sur le sol la matière déstructurée. La machine comprend en règle générale un caisson de réception de la balle, un démêleur chargé de rogner la balle, une turbine et sa volute de réception de la matière déstructurée, agencées pour la projeter au travers d'une goulotte afin que la matière puisse être déposée sur le sol à un endroit choisi. Un tapis roulant comprenant deux chaînes réunies par des tasseaux est entraîné à rotation autour d'un fond de la machine pour déplacer la balle en direction du démêleur. Une turbine de conception particulière permet, dans certaines machines, d'éviter l'utilisation d'un démêleur. A l'usage, il s'avère nécessaire de vérifier et de remplacer le cas échéant, les tasseaux, les chaînes. Par ailleurs, les tasseaux contournant le fond, entraînent régulièrement de la matière sous la machine, qui finit par s'accumuler autour de ceux-ci, ce qui nécessite de les nettoyer à intervalles réguliers. Des trappes de visite sont, à cet effet, prévues sous la machine pour la nettoyer.

On connaît encore à la lecture du brevet EP-A1-0 993 765, une machine de distribution de produits alimentaires pour le bétail. La machine comporte une benne comprenant un carter dans lequel est logé un ventilateur d'éjection. Ce carter possède une ouverture sur le côté orienté vers l'intérieur de la benne et une sortie latérale.

Devant l'ouverture d'entrée du carter d'éjection est disposé un tambour démêleur. Sur le fond de la benne est disposé un tapis de déplacement des produits.

Ce tapis est constitué par une bande transporteuse souple circulant en boucle et de manière continue autour de rouleaux situés près des extrémités avant et arrière de la benne. L'un de ces rouleaux est entraîné en rotation de sorte qu'il peut animer le tapis et lui fait amener les produits contenus dans la benne vers le tambour démêleur. L'entraînement d'un des rouleaux est réalisé par l'intermédiaire d'un moteur hydraulique qui est relié au circuit hydraulique du tracteur par des tuyaux. Au-dessus du tambour démêleur sont disposés des organes de retenue et un déflecteur. Ce déflecteur a au moins la même longueur que le tambour démêleur. Il est incliné et s'étend sensiblement depuis l'ouverture d'entrée du carter d'éjection vers le haut et vers l'arrière sensiblement jusqu'au niveau supérieur des parois de la benne.

Le demandeur a cherché une solution plus fiable et plus efficace pour entraîner la matière dans ce type de machine.

A cet effet, est proposée une machine destinée à déstructurer et à distribuer une matière, comprenant un caisson de chargement de ladite matière, un moyen de déstructuration, d'expulsion et un moyen de déplacement de la matière vers ledit moyen de déstructuration/d'expulsion. Selon l'invention, le moyen de déplacement comprend au moins un entraîneur susceptible de se mouvoir suivant un mouvement cyclique, de manière à soulever et déplacer par mouvements successifs la matière vers ledit moyen de déstructuration/d'expulsion.

La machine de l'invention est pourvue d'un entraîneur, à mouvement cyclique de relativement faible amplitude, plus fiable qu'une machine équipée d'un tapis roulant comprenant des tasseaux qui frottent contre le fond en s'usant. Elle est par ailleurs plus efficace puisque le fond de la machine peut être complètement fermé aux abords du moyen de déstructuration/d'expulsion contrairement à une machine équipée d'un tapis roulant monté en boucle autour de son fond.

Selon une caractéristique additionnelle de l'invention, le mouvement cyclique dudit entraîneur est de type combiné, produit d'un mouvement rotatif autour d'un axe et d'un mouvement coulissant mettant en oeuvre au moins un galet de guidage.

Selon une caractéristique additionnelle de l'invention, le mouvement cyclique dudit entraîneur est de type combiné, produit de deux mouvements rotatifs, respectivement autour de deux axes.

Selon une caractéristique additionnelle de l'invention, le moyen de déplacement comprend au moins un fond fixe destiné à supporter la matière dans le caisson, lorsqu'elle n'est pas déplacée par ledit entraîneur.

Selon une caractéristique de l'invention, ledit entraîneur est d'une structure monobloc. Sa structure rigide est plus résistante à l'usure qu'un tapis roulant connu de l'art antérieur.

Selon une caractéristique additionnelle de l'invention, ledit entraîneur est encadré par deux fonds fixes.

La matière à traiter repose latéralement sur les deux fonds fixes et l'entraîneur la soulève en son milieu pour la faire avancer.

Selon une caractéristique additionnelle de l'invention, pendant une phase de son mouvement, ledit entraîneur est soulevé au-dessus du niveau de la face supérieure du fond fixe et il est déplacé en direction du moyen de déstructuration/d'expulsion.

L'entraîneur soulève dans son mouvement la matière en passant au dessus du fond fixe, la fait avancer en direction du moyen de déstructuration/d'expulsion, repasse au-dessous du fond fixe où il ne soulève plus ladite matière qui repose alors sur le fond fixe, revient en arrière, puis remonte où il repasse à nouveau au-dessus du fond fixe pour entamer un nouveau cycle.

Selon une caractéristique de l'invention, le mouvement rotatif dudit entraîneur met en oeuvre au moins une bielle susceptible d'être entraînée par un moteur.

Selon une caractéristique additionnelle de l'invention, le mouvement coulissant dudit entraîneur met en oeuvre au moins une rainure dans laquelle peut coulisser un galet de guidage correspondant.

Selon une caractéristique additionnelle de l'invention, ledit entraîneur comporte un arbre tenu par des paliers, et aux extrémités desquelles sont montées deux bielles dont au moins une est attelée à un moteur d'entraînement à rotation tenu dans un longeron constitutif du châssis de la machine.

Selon une caractéristique additionnelle de l'invention, ledit entraîneur comprend des moyens d'entraînement. En accrochant la matière dans leur phase d'avancement, ils la font avancer de manière régulière.

Selon une caractéristique additionnelle de l'invention, les moyens d'entraînement sont constitués de rampes d'entraînement pourvues sur leurs bords supérieurs, de doigts, de dents.

Selon une caractéristique additionnelle de l'invention, le fond fixe couvre toute la largeur du caisson et les rampes peuvent faire saillie au travers du fond fixe. Celui-ci peut être constitué de plusieurs plaques entre lesquelles les rampes peuvent ressortir pour déplacer la matière ou être constitué d'une seule plaque traversée de rainures au travers desquelles les rampes peuvent ressortir.

Selon une caractéristique additionnelle de l'invention, ledit entraîneur comprend une plaque de fermeture de son fond et les moyens d'entraînement sont constitués de tasseaux, de picots, de doigts solidaires de la plaque.

Selon une caractéristique additionnelle de l'invention, les moyens d'entraînement sont constitués d'une tôle larmée formant une plaque fermeture de son fond ou d'une tôle incorporant un grillage.

Selon une caractéristique additionnelle de l'invention, deux rainures sont réalisées respectivement dans les deux rampes dans lesquelles sont logés deux galets de guidage correspondants qui sont tenus respectivement dans deux longerons constitutifs du châssis de la machine.

Selon une caractéristique additionnelle de l'invention, le moyen de déplacement comporte au moins deux entraîneurs disposés de manière juxtaposée, les arbres d'articulation étant décalés angulairement, le moyen de déplacement étant pourvu ou dépourvu de fond fixe.

Pendant que l'entraîneur supérieur déplace la matière, l'entraîneur inférieur revient, sans toucher la matière, vers une position de départ de cycle où il va à son tour prendre le relais pour soulever et déplacer ladite matière. Lorsque deux entraîneurs sont utilisés, il n'est plus indispensable de prévoir un fond fixe.

Selon une caractéristique additionnelle de l'invention, le moyen de déstructuration et d'expulsion comprend un démêleur apte à rogner la matière pendant son avancement, une turbine et sa volute, aptes à réceptionner la matière déstructurée pour la propulser au travers d'une goulotte de distribution.

Cette machine convient pour propulser la matière jusqu'à environ une quinzaine de mètres, distance à mettre en relation avec la puissance de la turbine.

Selon une caractéristique additionnelle de l'invention, le moyen de déstructuration et d'expulsion comprend un rotor tenu entre deux bras disposés, dans leur position de travail, dans le prolongement du moyen d'avancement.

Cette machine, moins puissante mais produisant moins de poussières, convient pour traiter des balles cylindriques enroulées. On peut également pailler simplement en déroulant la balle.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective avant d'une machine pour déstructurer et distribuer une matière selon l'invention,
la Fig. 2 représente une vue en perspective arrière d'une machine pour déstructurer et distribuer une matière selon l'invention,
la Fig. 3 représente une vue de dessous en perspective avant d'une machine pour déstructurer et distribuer une matière selon l'invention,
la Fig. 4 représente une vue en perspective avant d'une machine pour déstructurer et distribuer une matière et dont la porte d'accès est placée dans une position d'ouverture selon l'invention,
la Fig. 5 représente une vue en coupe longitudinale d'une machine pour déstructurer et distribuer une matière constituée d'une balle de fourrage cylindrique,
la Fig. 6 représente une vue en coupe longitudinale d'une machine pour déstructurer et distribuer une matière constituée d'une balle de fourrage parallélépipédique,
la Fig. 7 représente une vue en coupe longitudinale d'un moyen de déplacement de la matière dans une machine pour déstructurer et distribuer ladite matière et dont l'entraîneur est placé dans une position de retrait d'un fond fixe selon l'invention,
la Fig. 8 représente une vue en coupe longitudinale d'un moyen de déplacement de la matière dans une machine pour déstructurer et distribuer ladite matière et dont l'entraîneur est placé dans une position de déplacement de la matière selon l'invention,
la Fig. 9 représente une vue de dessus d'un moyen de déplacement de la matière dans une machine pour déstructurer et distribuer ladite matière selon l'invention,
la Fig. 10 représente une vue en perspective d'une plaque de fermeture du fond d'un entraîneur d'un moyen de déplacement de la matière pour une machine à déstructurer et distribuer ladite matière, et qui est pourvue de divers types de moyens d'entraînement de ladite matière selon l'invention,
la Fig. 11 représente une vue en perspective d'un fond fixe d'un moyen de déplacement de la matière pour une machine à déstructurer et distribuer ladite matière, et au travers duquel ressortent des moyens d'entraînement de ladite matière selon l'invention,
la Fig. 12a représente une vue schématique en coupe longitudinale d'une première variante de réalisation d'un moyen de déplacement de la matière pour une machine à déstructurer et distribuer ladite matière selon l'invention,
la Fig. 12b représente une vue schématique en coupe longitudinale d'une seconde variante de réalisation d'un moyen de déplacement de la matière pour une machine à déstructurer et distribuer ladite matière selon l'invention et,
la Fig. 12c représente une vue schématique en coupe longitudinale d'une troisième variante de réalisation d'un moyen de déplacement de la matière pour une machine à déstructurer et distribuer ladite matière selon l'invention,
la Fig. 12d représente une vue schématique en coupe longitudinale d'une quatrième variante de réalisation d'un moyen de déplacement de la matière pour une machine à déstructurer et distribuer ladite matière selon l'invention,
la Fig. 12e représente une vue en perspective de la quatrième variante de réalisation d'un moyen de déplacement de la matière, et qui est disposé dans une première position selon l'invention et,
la Fig. 12f représente une vue en perspective de la quatrième variante de réalisation d'un moyen de déplacement de la matière, et qui est disposé dans une seconde position selon l'invention.

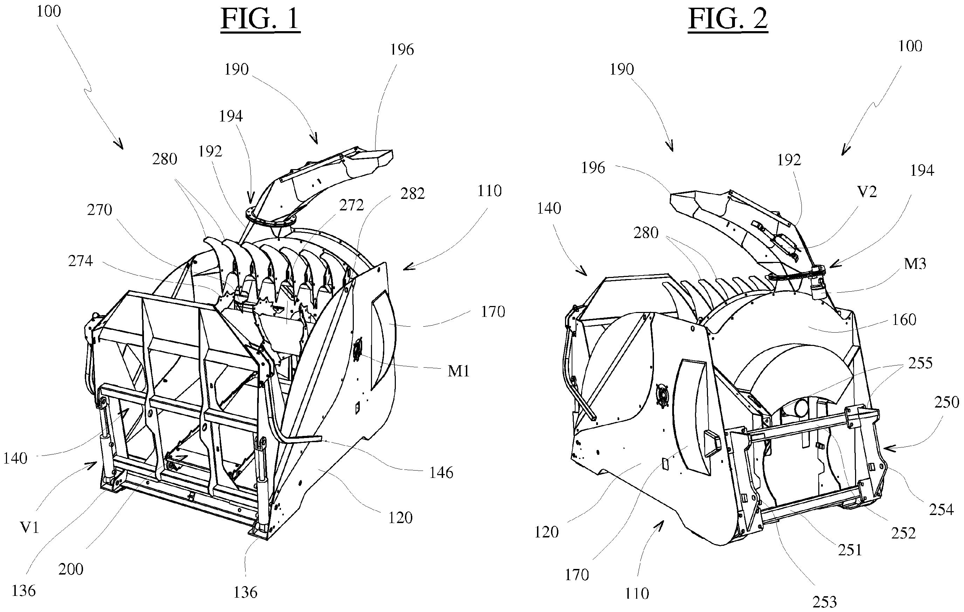

La machine 100, présentée sur les Figs. 1 et 2, est destinée à déstructurer et à distribuer, par projection, une matière végétale préalablement comprimée, utilisée comme fourrage, pour préparer une litière aux animaux, telle que de la paille ou encore du foin. Cette matière se présente généralement sous la forme de balles cylindriques ou de balles parallélépipédiques comprimées. Dans la suite de cette description, on utilisera le terme générique de balle pour désigner cette matière comprimée. Il est à noter cependant que la matière peut encore se présenter sous la forme d'un ensilage, tel qu'un ensilage de maïs ou une autre matière.

La machine est définie d'un point de vue structurel par un caisson 110 délimité par deux parois latérales 120, une porte d'accès 140 placée à l'extrémité avant de la machine entre les deux parois latérales, une paroi arrière 160 incluant une volute 170 d'une turbine (non visible) placée à l'autre extrémité de la machine et également située entre les deux parois latérales. On note encore la présence d'un moyen de déplacement 200 d'une ou de plusieurs balles qu'il convient de charger dans le caisson de la machine.

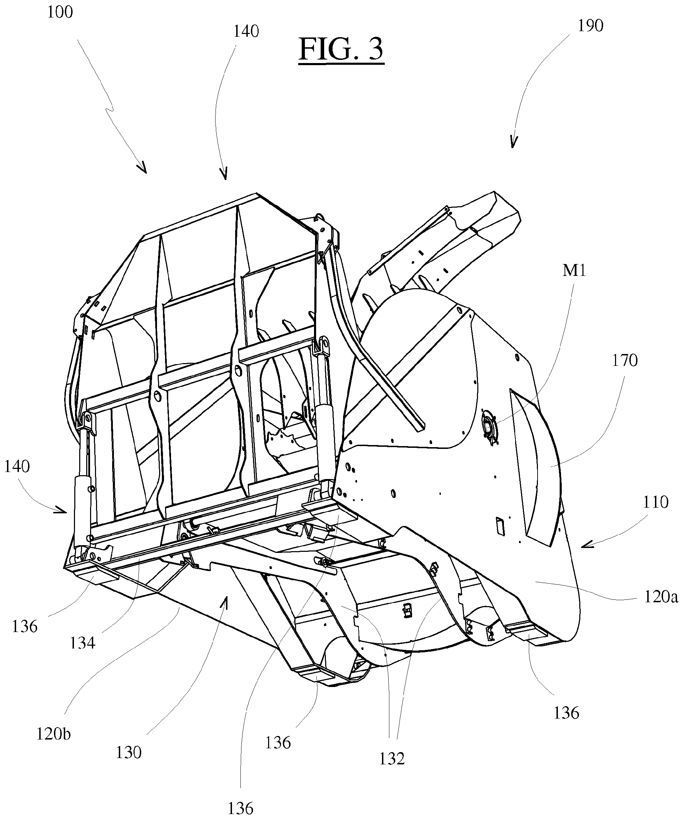

Sur la Fig. 3, le caisson 110 est fixé autour d'un châssis 130 intégrant en particulier des longerons 132, des traverses 134 et des pieds d'assise 136 sur lesquels la machine peut reposer au sol.

Sur la Fig. 2, un dispositif d'attelage 250 est monté entre les deux parois latérales 120, à l'arrière de la volute pour permettre à un engin de manutention, tel qu'un tracteur agricole ou un engin pourvu d'un bras télescopique, d'atteler la machine pour la manoeuvrer et la faire fonctionner. Il se compose sur cette Fig. 2, de deux traverses 251, 252, dont les extrémités sont fixées sur les deux parois latérales 120. Deux plaques 253, 254 disposées en vis-à-vis, sont fixées par boulonnage par l'intermédiaire de supports boulonnés, sur ces deux traverses 251, 252, et qui sont pourvues d'un moyen d'attelage 255 particulier. Celui-ci est constitué sur cette Fig. 2, de plaques trouées 255 aptes à réceptionner les embouts de levage solidaires du bras télescopique d'un engin de levage. Des moyens de raccordement électriques, hydrauliques, non représentés, sont installés à ce niveau pour pouvoir être connectés avec des équipements de l'engin.

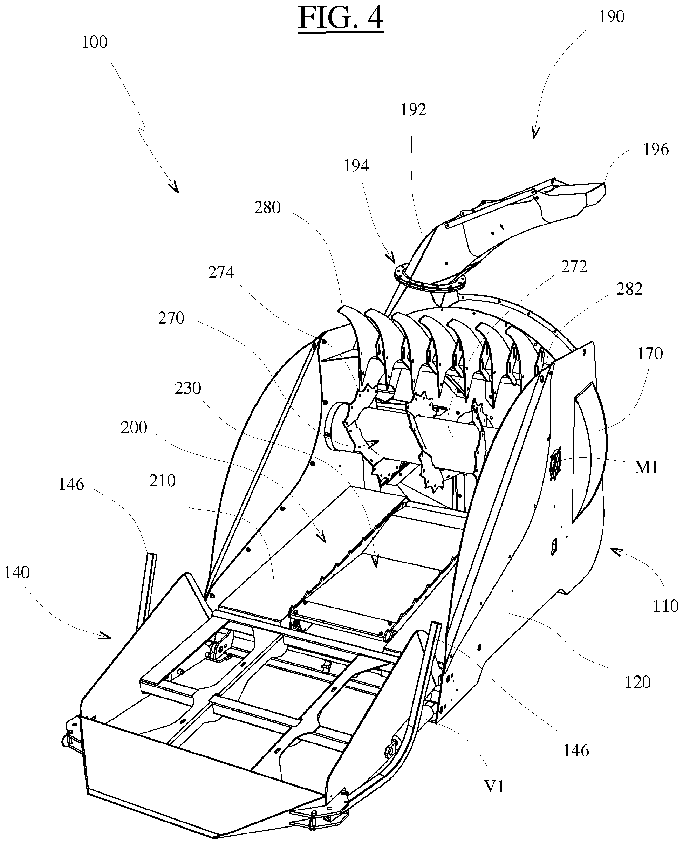

Sur la Fig. 4, la porte 140 est montée de manière articulée à la base de la machine. Elle est pourvue d'un moyen de manoeuvre V1 apte à la déplacer entre une position d'ouverture, visible sur cette Fig. 4, dans laquelle elle est disposée d'une manière quasi horizontale pour permettre le chargement d'une balle dans le caisson de la machine et une position de fermeture, visible sur la Fig. 1, où elle peut retenir une ou plusieurs balle(s) dans ladite machine. Le moyen de manoeuvre V1 est constitué, dans un mode préféré de réalisation, d'une paire de vérins hydrauliques avantageusement alimentés par le circuit hydraulique de l'engin. L'ancrage des vérins est judicieusement prévu dans les piètements 136 bordant les parois latérales 120.

La porte 140 est constituée de deux flasques latéraux réunis par des traverses solidaires de longerons supportant à la partie distale de la porte, une plaque obliquant vers le sol dans la position de d'ouverture de celle-ci, pour faciliter le chargement de la balle.

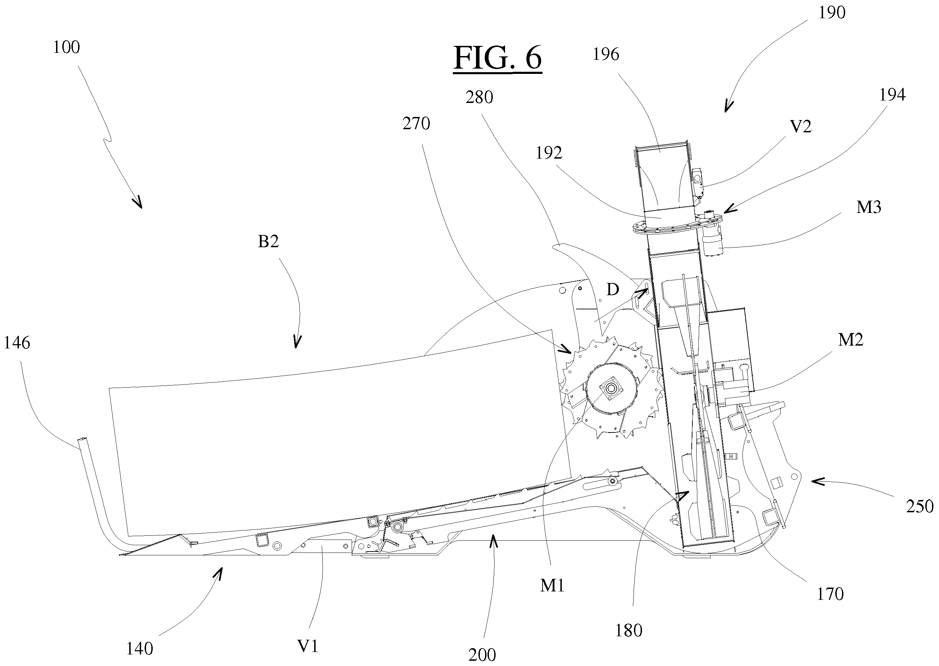

Deux tubes coudés 146, formant un moyen de retenue, sont montés de manière articulée dans le plan de la porte, au niveau de la plaque oblique et sont distinctement visibles sur la Fig. 4. Ils sont utilisés, après repliement dans le prolongement de la porte 140, pour retenir une balle parallélépipédique dans la machine comme cela apparaît sur la Fig. 6, ou plusieurs balles cylindriques alors que la porte demeure dans une position de quasi ouverture.

Sur les Figs. 1, 4, 5 et 6, un démêleur rotatif 270 est monté à rotation entre les deux parois latérales 120, à proximité de la volute 170 et à mi-hauteur du caisson pour rogner la balle afin de la déstructurer avant de renvoyer la matière vers la turbine. Le démêleur rotatif 270 est entraîné à rotation par l'intermédiaire d'un moteur M1 et de préférence par un moteur hydraulique alimenté par le circuit hydraulique de l'engin. Le démêleur rotatif 270 est constitué d'un cylindre 272, à la périphérie duquel sont disposés des couteaux 274 destinés à arracher la matière constitutive de la balle.

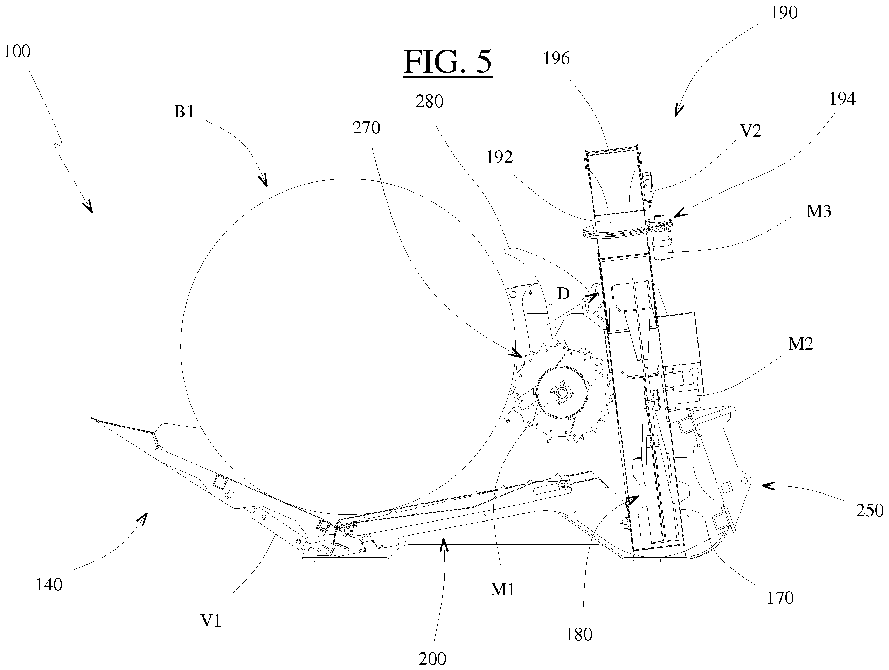

Le moteur hydraulique est avantageusement logé dans le cylindre pour conserver une efficacité constante sur toute la largeur du démêleur rotatif. Les couteaux 274 sont constitués de portions cylindriques pourvues de dents d'arrachement et qui sont disposées entre des portions d'hélicoïdes également pourvues de dents d'arrachement afin de rogner efficacement la périphérie d'une balle cylindrique sur toute sa largeur, indépendamment de son sens d'enroulement ou la face frontale d'une balle parallélépipédique. Le sens de rotation du démêleur est tel qu'il projette la matière dans la volute. La flèche D indique, sur les Fig. 5 et 6, cette direction de projection.

Des peignes 280 solidaires d'une traverse réunissent les deux parois latérales, de manière à limiter l'avancement de la balle alors qu'elle est entraînée par le moyen de déplacement 200 en direction du démêleur 270, pour éviter un bourrage de celui-ci. Les peignes sont de préférence positionnés au-dessus du démêleur rotatif 270. Ils présentent en vue de côté un profil concave tourné vers l'intérieur de la machine. Certains de ces peignes sont disposés dans le plan des portions cylindriques du démêleur pour accroître leur efficacité.

Sur la Fig. 2, la volute 170 se présente sous la forme d'une paroi cylindrique fermée par la paroi arrière 160 et ouverte vers l'intérieur de la machine pour recevoir la matière arrachée par le démêleur.

Sur les Figs. 5 et 6, une turbine 180 est disposée dans la volute 170 pour récupérer la matière déstructurée par le démêleur rotatif 270 afin de l'expulser au travers d'une goulotte 190 raccordée à ladite volute afin qu'elle puisse être distribuée à un endroit déterminé.

La turbine comprend une pluralité de pales entraînées à rotation autour d'un axe par l'intermédiaire d'un moteur M2 et de préférence par un moteur hydraulique alimenté par le circuit hydraulique de l'engin. Avantageusement, le moteur entraîne directement ladite turbine par son axe de rotation pour accroître le rendement de fonctionnement de la machine.

Sur les Figs. 1, 2 et 4, la goulotte 190 prolonge vers le haut la sortie de la volute. Elle est constituée d'une tubulure 192 raccordée à la volute par l'intermédiaire d'un manchon rotatif 194 lui procurant la faculté de tourner pour projeter la matière à la périphérie de la machine. Un moyen d'entraînement, tel qu'un moteur hydraulique M3 pourvu d'un pignon apte à entraîner une couronne dentée solidaire de la tubulure 192, dans le manchon rotatif, permet de faire tourner cette tubulure. Celle-ci est terminée par un bec 196 dont l'inclinaison en hauteur est susceptible d'être modifiée par l'intermédiaire d'un moyen de manoeuvre V2 pour régler la distance de projection de la matière. Ce moyen de manoeuvre est, de préférence, constitué d'un vérin électrique alimenté par le circuit électrique de l'engin. Ce vérin électrique procure un fonctionnement plus doux et précis qu'un vérin hydraulique. La matière peut ainsi être déposée en poste fixe sur la surface d'élevage d'une stabulation en agissant sur la position de la goulotte.

On aborde un aspect intéressant de l'invention et qui se rapporte au moyen de déplacement 200 susceptible de déplacer la balle dans la machine en direction du démêleur rotatif 270, afin qu'elle puisse être défaite, puis projetée.

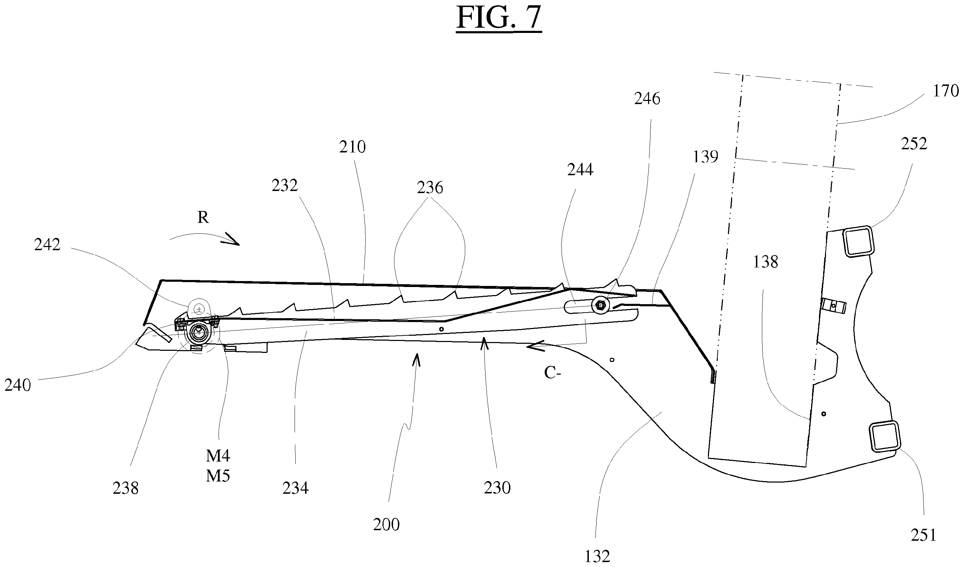

Le moyen de déplacement 200 comprend, sur les Figs. 7, 8 et 9, au moins un fond fixe 210 sur lequel repose, en partie, la balle à l'issue de son chargement dans la machine, au moins un entraîneur 230 susceptible d'être animé d'un mouvement cyclique apte à entraîner ladite balle en la soulevant et en la déplaçant, par mouvements successifs, dans une même direction.

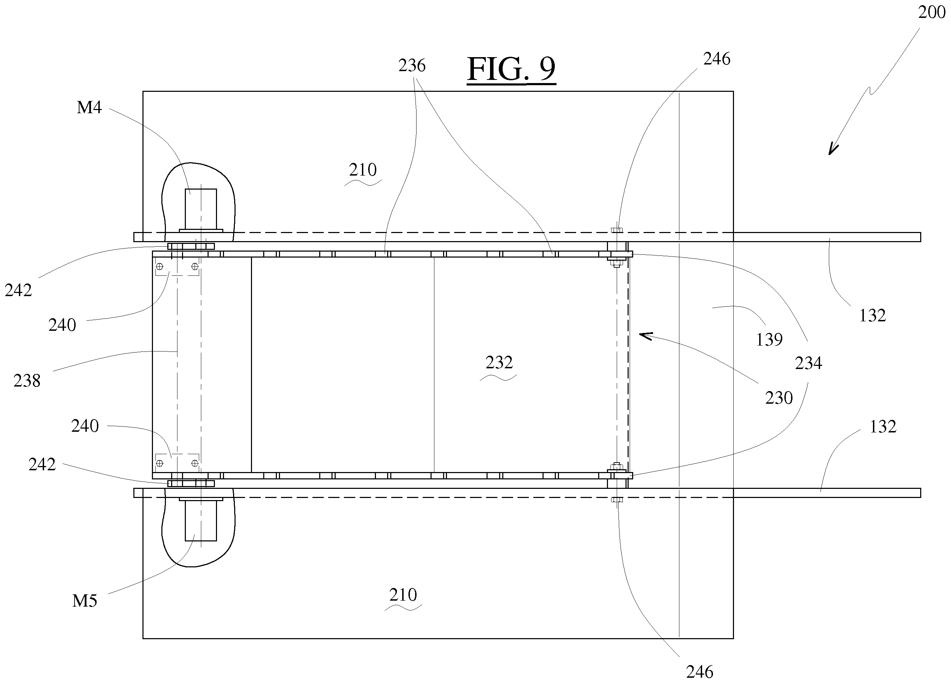

Dans un mode de réalisation avantageux présenté sur la Fig. 9, un entraîneur 230 est disposé entre deux fonds fixes 210. La balle peut ainsi reposer latéralement sur les fonds fixes alors que l'entraîneur placé en position centrale peut la soulever de manière cyclique dans sa partie médiane pour la faire avancer en direction du démêleur rotatif.

Chaque fond fixe 210 est constitué d'une plaque qui forme d'un bord le fond de la machine depuis la porte jusque vers la volute de la turbine où elle est prolongée par une paroi inclinée débouchant dans ladite volute délimitant ainsi un passage de la matière déstructurée vers l'intérieur de la volute. Chaque fond fixe 210 est solidarisé contre une paroi latérale et sur un longeron 132 qu'il recouvre bord à bord.

Sur les Figs. 7, 8 et 9, l'entraîneur 230 est constitué d'une structure monobloc. Il comprend une plaque 232 de fermeture de son fond pour que la matière demeure cantonnée dans le caisson et qui est encadrée par une paire de rampes d'entraînement 234, pourvues sur leurs bords supérieurs, de moyens d'entraînement tels que des dents 236 ou encore des doigts, aptes à accrocher la matière de la balle dans une phase d'avancement des rampes lorsqu'elles sont situées au-dessus des fonds fixes. Au moins une rampe intermédiaire peut encore être disposée entre les deux rampes d'entraînement 234 pour améliorer l'efficacité d'entraînement de la matière.

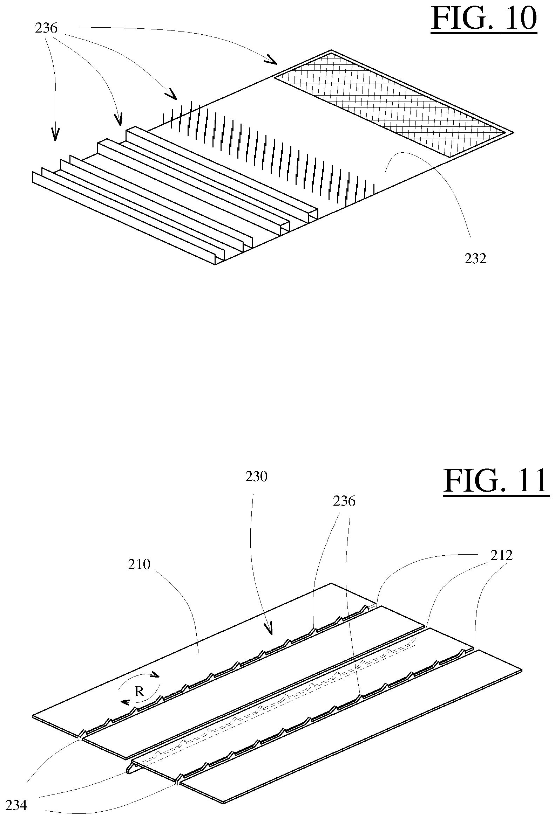

Sur la Fig. 10, la plaque 232 constitutive de l'entraîneur peut comporter différents autres types de moyens d'entraînement 236. Ils peuvent prendre la forme, de la gauche vers la droite sur cette Fig. 10, de tasseaux pleins, creux, de section en U en position normale ou inversée, de picots, de doigts implantés sur la plaque. Cette dernière peut encore être du type larmée, c'est-à-dire constituée d'une sorte de caillebotis, ou incorporer un grillage. La plaque n'est pourvue normalement que d'un seul type de moyens d'entraînement, cependant ils peuvent être combinés pour accroître leur efficacité.

Sur la Fig. 11, l'entraîneur 230 est dépourvu de plaque de fond. Celle-ci est cependant remplacée par un fond fixe 210 pour contenir la matière dans le caisson de la machine. Le fond fixe peut être constitué d'une plaque traversée de rainures longitudinales 212 au travers desquelles peuvent faire saillie des moyens d'entraînement 236 de la matière ou encore être constitué de plusieurs plaques espacées de telle sorte que les moyens d'entraînement puisse ressortir entre elles. Le mouvement cyclique des moyens d'entraînement 236 est symbolisé par les flèches R.

Les moyens d'entraînement 236 fonctionnent de préférence en alternance pour déplacer à tour de rôle la matière.

Sur les Figs. 7, 8 et 9, le mouvement cyclique de l'entraîneur 230 est du type combiné, produit d'un mouvement rotatif et d'un mouvement coulissant. De manière plus précise, ce mouvement est rotatif d'un bord de l'entraîneur et coulissant de l'autre.

L'entraîneur 230 comporte ainsi un arbre 238 tenu par deux paliers 240 solidaires de la plaque 232, cet arbre dépasse de chaque côté des rampes et à ses extrémités sont montées deux bielles 242 attelées respectivement à deux moteurs M4 et M5 d'entraînement à rotation tenus dans les longerons 132 constitutifs du châssis de la machine. Ces moteurs sont là encore, de préférence, de type hydraulique et alimentés par le circuit hydraulique de l'engin. L'arbre 238 est situé d'un bord de l'entraîneur, et à gauche sur ces Figs. 7, 8 et 9. De son autre bord, chaque rampe 234 est traversée d'une rainure 244 susceptible de coulisser autour d'un galet de guidage 246 tenu dans un longeron correspondant. Ainsi, l'entraîneur tourne d'un bord autour de l'axe des moteurs M pour soulever la matière et coulisse de son autre bord le long des galets de guidage 246 pour faire avancer la matière.

L'entraînement à rotation des moteurs déplace alors l'entraîneur suivant un mouvement rotatif/coulissant. La rainure est ici de type à axe rectiligne. Son axe médian est de préférence sécant avec celui de l'arbre 238. Elle pourrait cependant présenter une géométrie différente, par exemple en forme d'arc de cercle pour soulever davantage l'entraîneur pendant sa phase d'avancement. Par ailleurs, l'axe pourrait être solidaire de l'entraîneur et la rainure être réalisée dans le longeron.

Dans un mode de réalisation économique, un seul moteur d'entraînement d'une bielle pourrait encore être mis en oeuvre.

Ce moyen de déplacement est simple et économique à fabriquer. Il remplace avantageusement les systèmes d'entraînement du type comprenant des tasseaux entraînés en boucle par une transmission à chaîne et pignons, moins fiables et plus coûteux.

L'entraîneur 230 est disposé de manière à ce qu'il puisse s'effacer, dans une phase de son mouvement cyclique, sous le niveau de la face supérieure des fonds fixes 210 alors que la bielle 242 a son pied tourné vers le bas, laissant ainsi la balle reposer sur ces fonds fixes. Cette position est présentée sur la Fig. 7. La flèche R montre le sens de rotation des moteurs indiquant le mouvement rotatif de la partie située à gauche de l'entraîneur 230 alors que la flèche C- indique le mouvement coulissant vers la gauche, de la partie située à droite de l'entraîneur.

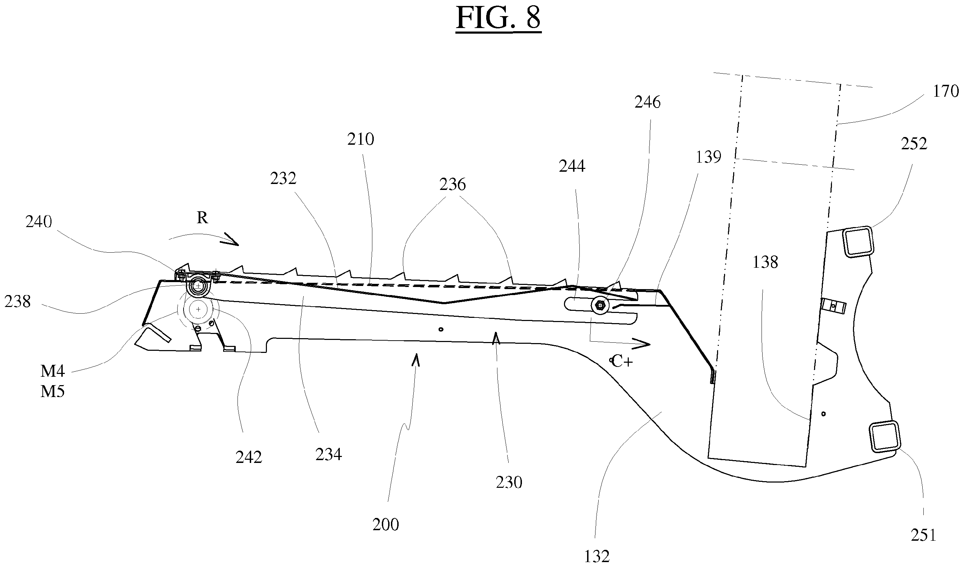

Lorsqu'elle poursuit son mouvement de rotation, et que le pied de bielle remonte verticalement comme cela apparaît sur la Fig. 8, l'entraîneur et en particulier les dents 236 font progressivement saillie au-dessus de la face supérieure des fonds fixes 210. Les bielles entraînent alors l'entraîneur 230 en direction du démêleur suivant une direction de coulissement indiquée par la flèche C+, c'est-à-dire vers la droite sur cette Fig. 8, ce qui emmène la balle à être rognée par le démêleur. Puis le mouvement de rotation des bielles continue si bien que l'entraîneur s'efface progressivement sous le niveau de la face supérieure des fonds fixes, pour entamer un nouveau cycle et au fil du temps, l'intégralité de la balle peut alors être déchiquetée par le démêleur et expulsée par la turbine au travers de la goulotte. On remarquera que le sens de rotation R des moteurs est tel qu'il déplace l'entraîneur en direction du démêleur dans la phase ou il fait saillie au-dessus des fonds fixes.

L'entraînement rotatif de l'entraîneur 230 est situé, sur ces Figs. 7 et 8, à l'opposé de la volute 170 alors que l'entraînement coulissant est situé à proximité de ladite volute afin qu'il puisse repousser la matière. Une solution alternative, certes un peu moins efficace puisque la matière serait tirée, consisterait à inverser ces deux moyens d'entraînement.

Par ailleurs, une paroi 139 reliant les longerons 132 prend naissance dans les rainures des deux rampes 234 et se prolonge par une paroi inclinée dans la goulotte, fermant ainsi complètement le fond de la machine dans le prolongement de l'entraîneur. Cette paroi est visible sur les Figs. 7, 8 et 9.

Il est intéressant de remarquer que sur les Figs. 7 et 8, chaque longeron qui supporte un moteur et un galet de guidage est prolongé d'un bord par une partie incurvée dans laquelle un décrochement 138 est prévu pour réceptionner la paroi cylindrique de la volute 170. Par ailleurs, cette partie incurvée est terminée par une paroi de retour sur laquelle sont solidarisées dans des emplacements prévus à cet effet, les traverses 251 et 252 du dispositif d'attelage.

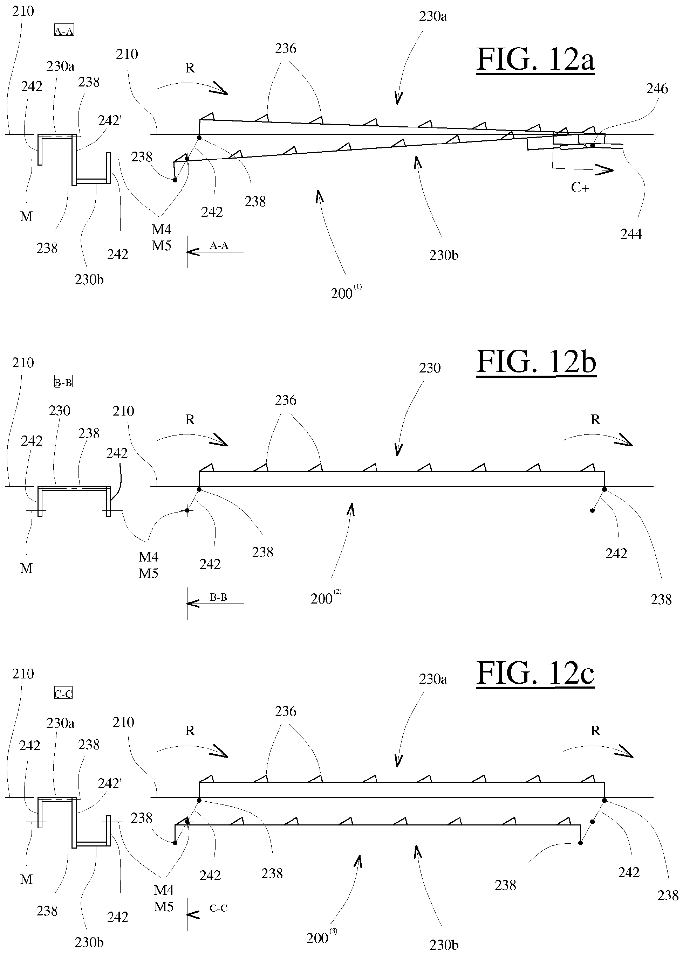

Dans une première variante de réalisation du moyen de déplacement 200 ⁽¹⁾ présentée sur la Fig. 12a, celui-ci comprend un fond fixe 210, et deux entraîneurs 230a et 230b. Ceux-ci sont disposés de manière juxtaposée comme cela apparaît sur la vue en détail sur la gauche. Les arbres d'articulation 238 des entraîneurs 230 sont décalés, et ici d'une valeur angulaire de 180 ° autour de l'axe du moteur M. Ils sont réunis par un maneton 242'. Le ou les galets de guidage 246 autour desquels coulissent les rainures 244, ont un axe commun. Le mouvement de chaque entraîneur est ici encore de type combiné, produit d'un mouvement rotatif et d'un mouvement coulissant. La flèche R montre le sens de rotation des moteurs M4, M5, indiquant le mouvement rotatif de la partie située à gauche des entraîneurs 230 alors que la flèche C+ indique le mouvement coulissant vers la droite de la partie située à droite de l'entraîneur supérieur. D'autres entraîneurs peuvent également être associés au moyen de déplacement 200 ⁽¹⁾, par paires, ou en étant reliés entre eux par des manetons.

Dans une deuxième variante de réalisation du moyen de déplacement 200 ⁽²⁾ présentée sur la Fig. 12b, celui-ci comprend un fond fixe 210, un entraîneur 230. Ce dernier est susceptible d'être animé d'un mouvement combiné, produit d'un premier mouvement rotatif et d'un second mouvement rotatif. De manière plus précise, ce mouvement est rotatif de chaque bord de l'entraîneur. Les deux mouvements sont synchronisés et calés de la même manière si bien que tous les points de l'entraîneur se déplacent à la même vitesse et en suivant la même trajectoire. Pendant son mouvement combiné, l'orientation de l'entraîneur ne change pas, tel un mouvement de pédale. Au moins un moteur M4, M5 d'entraînement à rotation est utilisé pour entraîner les entraîneurs. Là encore, la matière est soulevée puis déplacée, par mouvements successifs, dans une même direction.

Les mouvements sont synchronisés, par exemple, par l'intermédiaire d'une transmission de type chaîne et pignons.

Dans une troisième variante de réalisation du moyen de déplacement 200⁽³⁾ présentée sur la Fig. 12c, celui-ci comprend un fond fixe 210, deux entraîneurs230. Chaque entraîneur 230 est susceptible d'être animé d'un mouvement combiné, produit d'un premier mouvement rotatif et d'un second mouvement rotatif, identique à celui présenté sur la Fig.12b. Les deux entraîneurssont décalés, et ici d'un angle de 180° autour de l'axe de rotation des bielles 242si bien qu'un entraîneurentraîne la matière en direction du démêleur alors que l'autre se déplace en sens inverse sous le niveau de la face supérieure du fond fixe 210 avant de prendre le relais pour entraîner à son tour la matière. Là encore, d'autres entraîneurspeuvent être associés au moyen de déplacement 200 ⁽³⁾.

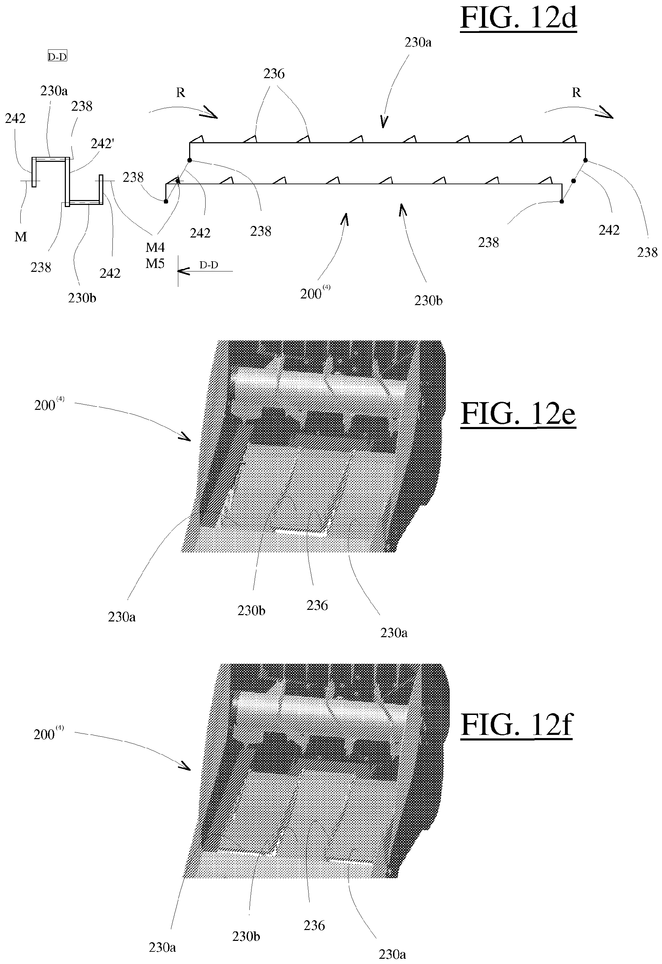

Dans une quatrième variante de réalisation du moyen de déplacement 200 ⁽⁴⁾ présentée sur la Fig. 12d, celui-ci est dépourvu de fond fixe et comprend, en revanche, au moins deux entraîneurs 230. La présence du fond fixe est utile mais pas indispensable. En effet, la matière peut reposer sur les entraîneurslorsqu'ils sont immobiles, c'est-à-dire lorsque la machine ne fonctionne pas. Lorsqu'ils sont en mouvement, la matière est entraînée en direction du démêleur par l'entraîneur supérieur, pendant que l'entraîneurinférieur se déplace en sens inverse sans toucher la matière afin de prendre à son tour le relais pour déplacer la matière.Le moyen de déplacement 200 ⁽⁴⁾ est ainsi pourvu de deux entraîneurs 230a et 230b. Chaque entraîneur 230 est susceptible d'être animé d'un mouvement combiné, produit d'un premier mouvement rotatif et d'un second mouvement rotatif, identique à celui présenté sur la Fig. 12b. Les deux entraîneurs sont décalés, et ici d'un angle de 180°autour de l'axe de rotation des bielles 242 si bien qu'un entraîneur déplace la matière en direction du démêleur alors que l'autre se déplace en sens inverse, avant de prendre le relais pour entraîner à son tour la matière. Là encore, d'autres entraîneurs peuvent être associés au moyen de déplacement 200 ⁽⁴⁾. Avantageusement, le moyen de déplacement 200 ⁽⁴⁾ comporte, sur les Fig. 12e et 12f, trois entraîneurs, deux extérieurs 230a et un intérieur, 230b, situé entre. Les arbres d'articulation des entraîneurs extérieurs 230a sont calés à 0° et sont décalés des arbres d'articulation de l'entraîneur intérieur 230b d'une valeur angulaire de 180° autour de l'axe du moteur. Sur la Fig. 12e, l'entraîneur intérieur 230b fait avancer la matière au-dessus des entraîneurs extérieurs 230a, alors que sur la Fig.12f, ce sont les entraîneurs extérieurs 230a qui font avancer la matière au-dessus de l'entraîneur intérieur 230b. On obtient de la sorte un déplacement régulier de la matière qui est soulevée alternativement par ses côtés, puis par sa partie centrale.

Le mouvement des entraîneurs peut aussi être semblable à celui présenté sur la Fig. 12a.

Sur la Fig. 5, une balle de type cylindrique, constituée d'un enroulement compressé d'un fourrage comme de la paille, du foin, a été placée dans la machine. La porte d'accès 140 n'est pas complètement refermée, elle est orientée dans une direction oblique permettant le chargement d'une balle de relativement grand diamètre ou de plusieurs balles de plus petit diamètre.

Sur la Fig. 6, une balle parallélépipédique, constituée d'un fourrage compressé comme de la paille, du foin, a été placée dans la machine. La porte d'accès 140 est placée dans sa position d'ouverture, et les tubes coudés 146 ont été repliés par le dessus de ladite porte pour retenir dans le caisson cette balle parallélépipédique plus encombrante.

Pour contrôler le fonctionnement de la machine alors qu'elle est attelée et raccordée à l'engin, un boîtier de commande lui est associé. Ce boîtier est installé dans la cabine de l'engin. Ce boîtier de commande permet en particulier de commander :
- l'ouverture et la fermeture de la porte d'accès,
- la rotation de la goulotte et l'inclinaison haute et basse de son bec d'orientation,
- le démarrage et l'arrêt de la turbine,
- le démarrage et l'arrêt du moyen d'avancement et du démêleur,
- le démarrage du moyen d'avancement en sens inverse à une vitesse réduite et du démêleur en sens inverse à une vitesse réduite, pour anticiper un bourrage.

Le fonctionnement de la machine se présente de la manière suivante. L'utilisateur commande l'ouverture de la porte d'accès 140 et procède au chargement d'au moins une balle en approchant la machine vers ladite balle calée, par exemple contre un mur ou en procédant à son chargement manuel. De préférence, le filet ou la ficelle qui l'entoure est retiré. L'utilisateur commande ensuite la fermeture au moins partielle de la porte, puis déplace la machine vers le lieu de déversement de la matière. Il démarre alors la turbine 180, puis lorsqu'elle est lancée, il peut alors démarrer le moyen de déplacement 200 de la balle ainsi que le démêleur 270. Celui-ci rogne alors la balle qui est sans cesse repoussée contre le démêleur et la matière arrachée est projetée dans la turbine 180 qui l'expulse au travers de la goulotte 190. L'utilisateur oriente le jet pour que la matière atteigne le sol et soit correctement répartie. Il est à noter que le fonctionnement de la turbine est prioritaire par rapport à celui du démêleur et/ou du moyen d'avancement afin d'éviter son calage.

La machine pour déstructurer et distribuer une matière de l'invention procure un fonctionnement plus fiable et plus efficace qu'une machine conventionnelle équipée classiquement d'un tapis roulant.

Par ailleurs, aucun interstice ne subsiste entre le fond et la volute si bien que le fonctionnement de l'entraîneur n'entraîne pas de matière sous la machine.

Elle est également plus silencieuse et plus économique à fabriquer.

Le fonctionnement de l'entraîneur ne nécessite aucune maintenance particulière.

Pour les balles parallélépipédiques, comme l'entraîneur s'efface sous les deux fonds fixes latéraux, la balle n'est pendant cette phase, plus comprimée contre le démêleur. On réduit ainsi le risque de bourrage de la machine.

Dans une variante de réalisation, non représentée, la machine est destinée à défaire uniquement des balles cylindriques constituées d'un enroulement compressé. Le démêleur, la turbine et sa volute constitutifs de son moyen de déstructuration et d'expulsion sont ici remplacés par un rotor tenu entre deux bras mobiles entre une position de travail où ils sont tournés dans le prolongement du moyen de déplacement et une position de repli sous la machine.

Le rotor comprend un arbre entraîné à rotation par l'intermédiaire d'un moteur et de préférence un moteur hydraulique pouvant être alimenté par le circuit hydraulique de l'engin. Des doigts sont disposés radialement à la périphérie de cet arbre pour, dans la position de travail des bras, défaire la nappe enroulée de la balle cylindrique alors qu'elle est déplacée à rotation par le moyen de déplacement et projeter la matière dans la direction de déplacement dudit moyen de déplacement. La machine peut être montée sur une base pivotante d'axe quasi vertical pour orienter la direction de projection de la matière.

Dans la position de repliement des bras sous la machine, la nappe constitutive de la balle peut être déroulée sur le sol.

## Revendications

1. Machine (100) destinée à déstructurer et à distribuer des balles de fourrage, comprenant un caisson (110) de chargement de ladite balle de fourrage, un moyen de déstructuration, d'expulsion et un moyen de déplacement de la balle de fourrage vers ledit moyen de déstructuration/d'expulsion, le moyen de déplacement (200-200 ⁽⁴⁾) comprenant au moins un entraîneur (230) susceptible de se mouvoir suivant un mouvement cyclique, le mouvement cyclique dudit entraîneur incluant une composante de mouvement rotatif autour d'un axe, **caractérisée en ce que** l'entraîneur (230) présente une structure monobloc et rigide, et **en ce que** le mouvement rotatif dudit entraîneur met en oeuvre au moins une bielle (242) susceptible d'être entraînée par un moteur (M4, M5), de manière à soulever et déplacer par mouvements successifs la balle de fourrage, à chaque rotation de bielle (242), vers ledit moyen de déstructuration/d'expulsion.

2. Machine (100) selon la revendication 1, **caractérisée en ce que** le mouvement cyclique dudit entraîneur (230) est de type combiné, produit d'un mouvement rotatif autour d'un axe (M) et d'un mouvement coulissant mettant en oeuvre respectivement au moins ladite bielle (242) et au moins un galet de guidage (246).

3. Machine (100) selon la revendication 1, **caractérisée en ce que** le mouvement cyclique dudit entraîneur (230) est de type combiné, produit de deux mouvements rotatifs, mettant en oeuvre respectivement au moins deux bielles (242) autour de deux axes (M).

4. Machine (100) selon la revendication 1, 2 ou 3 **caractérisée en ce que** le moyen de déplacement (200, 200 ⁽³⁾) comprend au moins un fond fixe (210) destiné à supporter la balle de fourrage dans le caisson (110), lorsqu'elle n'est pas déplacée par ledit entraîneur (230).

5. Machine (100) selon la revendication 4, **caractérisée en ce que** ledit entraîneur (230) est encadré par deux fonds fixes (210).

6. Machine (100) selon la revendication 4 ou 5, **caractérisée en ce que** pendant une phase de son mouvement, ledit entraîneur (230) est soulevé au-dessus du niveau de la face supérieure dudit fond fixe (210) et il est déplacé en direction du moyen de déstructuration/d'expulsion.

7. Machine (100) selon l'une quelconque des revendications 2 à 6, **caractérisée en ce que** ledit galet de guidage (246) coulisse dans une rainure (244) pendant le mouvement de coulissement dudit entraîneur (230).

8. Machine (100) selon l'une quelconque des revendications précédentes, **caractérisée en ce que** ledit entraîneur (230) comporte un arbre (238) tenu par des paliers (240), et aux extrémités desquelles sont montées deux bielles (242) dont au moins une est attelée à un moteur (M4, M5) d'entraînement à rotation tenu dans un longeron (132) constitutif du châssis (130) de la machine.

9. Machine (100) selon l'une quelconque des revendications précédentes, **caractérisée en ce que** ledit entraîneur (230) comprend des moyens d'entraînement (236).

10. Machine (100) selon la revendication 9, **caractérisée en ce que** les moyens d'entraînement sont constitués de rampes d'entraînement (234) pourvues sur leurs bords supérieurs, de doigts, de dents (236).

11. Machine (100) selon la revendication 10, **caractérisée en ce que** le fond fixe (210) couvre toute la largeur du caisson (110) et **en ce que** les rampes (234) peuvent faire saillie au travers du fond fixe (210).

12. Machine (100) selon la revendication 9, **caractérisée en ce que** ledit entraîneur (230) comprend une plaque (232) de fermeture de son fond et **en ce que** les moyens d'entraînement (236) sont constitués de tasseaux, de picots, de doigts solidaires de la plaque (232).

13. Machine (100) selon la revendication 9, **caractérisée en ce que** les moyens d'entraînement (236) sont constitués d'une tôle larmée formant une plaque fermeture de son fond ou d'une tôle incorporant un grillage.

14. Machine (100) selon la revendication 10 à 13, **caractérisée en ce que** deux rainures (244) sont réalisées respectivement dans les deux rampes (234) dans lesquelles sont logés deux galets de guidage (246) correspondants qui sont tenus respectivement dans deux longerons (132) constitutifs du châssis de la machine.

15. Machine (100), selon l'une quelconque des revendications précédentes, **caractérisée en ce que** le moyen de déplacement (200 ⁽¹⁾, 200 ⁽³⁾, 200 ⁽⁴⁾) comporte au moins deux entraîneurs (230) disposés de manière juxtaposée, les arbres d'articulation (238) étant décalés angulairement, le moyen de déplacement (200 ⁽¹⁾, 200 ⁽³⁾, 200 ⁽⁴⁾) étant pourvu ou dépourvu de fond fixe (210).

16. Machine (100) selon l'une quelconque des revendications 1 à 15, **caractérisée en ce que** le moyen de déstructuration et d'expulsion comprend un démêleur (270) apte à rogner la balle de fourrage pendant son avancement, une turbine (180) et sa volute (170), aptes à réceptionner la balle de fourrage déstructurée pour la propulser au travers d'une goulotte de distribution (190).

17. Machine (100) selon l'une quelconque des revendications 1 à 15, **caractérisée en ce que** le moyen de déstructuration et d'expulsion comprend un rotor tenu entre deux bras disposés, dans leur position de travail, dans le prolongement du moyen d'avancement (200-200 ⁽⁴⁾).

## Patentansprüche

1. Zum Zerkleinern und Verteilen von Futterballen ausgebildete Maschine (100), umfassend einen Kasten (110) zum Beladen des Futterballens, ein Mittel zum Zerkleinern und Auswerfen und ein Mittel zum Befördern des Futterballens zum Mittel zum Zerkleinern/Auswerfen, wobei das Beförderungsmittel (200-200 ⁽⁴⁾) wenigstens einen Mitnehmer (230) umfasst, der ausgebildet ist, sich in einer zyklischen Bewegung zu bewegen, wobei die zyklische Bewegung des Mitnehmers eine Bewegungskomponente aus einer Drehung um eine Achse umfasst, **dadurch gekennzeichnet, dass** der Mitnehmer (230) eine einteilige und starre Struktur aufweist, und dass die Drehbewegung des Mitnehmers eine Pleuelstange (242) nutzt, die ausgebildet ist, von einem Motor (M4, M5) angetrieben zu werden, um durch aufeinanderfolgende Bewegungen bei jeder Drehung der Pleuelstange (242) den Futterballen anzuheben und zum Mittel zum Zerkleinern/Auswerfen zu befördern.

2. Maschine (100) nach Anspruch 1, **dadurch gekennzeichnet, dass** die zyklische Bewegung des Mitnehmers (230) in kombinierter Form erfolgt, erzeugt durch eine Drehbewegung um eine Achse (M) und eine Schiebebewegung durch Nutzen jeweils wenigstens der Pleuelstange (242) und wenigstens einer Führungsrolle (246).

3. Maschine (100) nach Anspruch 1, **dadurch gekennzeichnet, dass** die zyklische Bewegung des Mitnehmers (230) in kombinierter Form erfolgt, erzeugt durch zwei Drehbewegungen durch Nutzen jeweils von wenigstens zwei Pleuelstangen (242) um zwei Achsen (M).

4. Maschine (100) nach Anspruch 1, 2 oder 3, **dadurch gekennzeichnet, dass** das Beförderungsmittel (200, 200 ⁽³⁾) wenigstens einen festen Boden (210) umfasst, der ausgebildet ist, den Futterballen im Kasten (110) zu stützen, wenn dieser nicht vom Mitnehmer (230) befördert wird.

5. Maschine (100) nach Anspruch 4, **dadurch gekennzeichnet, dass** der Mitnehmer (230) von zwei festen Böden (210) eingerahmt ist.

6. Maschine (100) nach Anspruch 4 oder 5, **dadurch gekennzeichnet, dass** während einer Phase seiner Bewegung der Mitnehmer (230) über die Höhe der Oberseite des festen Bodens (210) angehoben und in Richtung des Mittels zum Zerkleinern/Auswerfen befördert wird.

7. Maschine (100) nach einem der Ansprüche 2 bis 6, **dadurch gekennzeichnet, dass** die Führungsrolle (246) während der Schiebebewegung des Mitnehmers (230) in einer Nut (244) läuft.

8. Maschine (100) nach einem der vorhergehenden Ansprüche, **dadurch gekennzeichnet, dass** der Mitnehmer (230) eine von Lagern (240) gehaltene Welle (238) umfasst, an deren Enden zwei Pleuelstangen (242) montiert sind, von denen wenigstens eine mit einem im Längsträger (132), der Bestandteil des Chassis (130) der Maschine ist, gehaltenen Drehantriebsmotor (M4, M5) verbunden ist.

9. Maschine (100) nach einem der vorhergehenden Ansprüche, **dadurch gekennzeichnet, dass** der Mitnehmer (230) Antriebsmittel (236) umfasst.

10. Maschine (100) nach Anspruch 9, **dadurch gekennzeichnet, dass** die Antriebsmittel aus an ihren oberen Rändern mit Fingern und Zähnen (236) ausgestatteten Antriebsrampen (234) bestehen.

11. Maschine (100) nach Anspruch 10, **dadurch gekennzeichnet, dass** der feste Boden (210) die gesamte Breite des Kastens (110) abdeckt und dass die Rampen (234) über den festen Boden (210) hervorragen können.

12. Maschine (100) nach Anspruch 9, **dadurch gekennzeichnet, dass** der Mitnehmer (230) eine Platte (232) zum Verschließen seines Bodens aufweist und dass die Antriebsmittel (236) aus mit der Platte (232) verbundenen Leisten, Stacheln und Fingern bestehen.

13. Maschine (100) nach Anspruch 9, **dadurch gekennzeichnet, dass** die Antriebsmittel (236) aus einem eine Platte zum Verschließen seines Bodens bildenden Warzenblech oder einem ein Gitter aufweisenden Blech bestehen.

14. Maschine (100) nach Anspruch 10 bis 13, **dadurch gekennzeichnet, dass** zwei Nuten (244) jeweils in den zwei Rampen (234) angeordnet sind, in denen zwei entsprechende Führungsrollen (246) angeordnet sind, die jeweils in zwei Längsträgern (132) gehalten werden, die Bestandteile des Chassis der Maschine sind.

15. Maschine (100) nach einem der vorhergehenden Ansprüche, **dadurch gekennzeichnet, dass** das Beförderungsmittel (200 ⁽¹⁾, 200 ⁽³⁾, 200 ⁽⁴⁾) wenigstens zwei nebeneinander angeordnete Mitnehmer (230) umfasst, wobei die Gelenkwellen (238) winkelförmig versetzt sind, wobei das Beförderungsmittel (200 ⁽¹⁾, 200 ⁽³⁾, 200 ⁽⁴⁾) einen festen Boden (210) aufweist oder nicht.

16. Maschine (100) nach einem der Ansprüche 1 bis 15, **dadurch gekennzeichnet, dass** das Mittel zum Zerkleinern und Auswerfen einen zum Schneiden des Futterballens ausgebildeten Häcksler (270), eine Turbine (180) und ihre Spirale (170), ausgebildet zur Aufnahme des zerkleinerten Futterballens, um diesen über eine Verteilrutsche (190) zu transportieren, umfasst.

17. Maschine (100) nach einem der Ansprüche 1 bis 15, **dadurch gekennzeichnet, dass** das Mittel zum Zerkleinern und Auswerfen einen zwischen zwei in ihrer Arbeitsstellung in der Verlängerung des Vorschubmittels (200-200 ⁽⁴⁾) angeordneten Armen gehaltenen Rotor umfasst.

## Claims

1. Device (100) intended for disintegrating and distributing bales of fodder, comprising a casing (110) for the loading of the said bale of fodder, a disintegrating, expulsion means and a displacement means for moving the bale of fodder towards the said disintegrating/expulsion means, the displacement means (200-200⁽⁴⁾) comprising at least one driver (230) capable of moving in a cyclic movement, the cyclic movement of the said driver including a rotary component of movement about an axis, **characterized in that** the driver (230) has a monoblock and rigid structure, and **in that** the rotary movement of the said driver involves at least one connecting rod (242) capable of being driven by a motor (M4, M5) so as to lift the bale of fodder, upon each rotation of the connecting rod (242) and in successive movements move it towards the said disintegration/expulsion means.

2. Machine (100) according to Claim 1, **characterized in that** the cyclic movement of the said driver (230) is of combined type, made up of a rotary movement about an axis (M) and of a sliding movement respectively involving at least the said connecting rod (242) and at least one guide roller (246).

3. Machine (100) according to Claim 1, **characterized in that** the cyclic movement of the said driver (230) is of combined type, made up of two rotary movements, respectively involving at least two connecting rods (242) about two axes (M).

4. Machine (100) according to Claim 1, 2 or 3, **characterized in that** the displacement means (200, 200⁽³⁾) comprises at least one fixed bottom wall (210) intended to support the bale of fodder in the casing (110) when the bale is not being displaced by the said driver (230).

5. Machine (100) according to Claim 4, **characterized in that** the said driver (230) is flanked by two fixed bottom walls (210).

6. Machine (100) according to Claim 4 or 5, **characterized in that** during one phase of its movement, the said driver (230) is lifted above the level of the top face of the said fixed bottom wall (210) and moved towards the disintegration/expulsion means.

7. Machine (100) according to any one of Claims 2 to 6, **characterized in that** the said guide roller (246) slides in a slot (244) during the sliding movement of the said driver (230).

8. Machine (100) according to any one of the preceding claims, **characterized in that** the said driver (230) comprises a shaft (238) held in bearings (240), and at the ends of which are mounted two connecting rods (242) at least one of which is coupled to a rotational-drive motor (M4, M5) held in a longitudinal member (132) that forms part of the chassis (130) of the machine.

9. Machine (100) according to any one of the preceding claims, **characterized in that** the said driver (230) comprises drive means (236).

10. Machine (100) according to Claim 9, **characterized in that** the drive means consist of drive ramps (234) provided on their upper edges with fingers, teeth (236).

11. Machine (100) according to Claim 10, **characterized in that** the fixed bottom wall (210) covers the entire width of the casing (110) and **in that** the ramps (234) may project through the fixed bottom wall (210).

12. Machine (100) according to Claim 9, **characterized in that** the said driver (230) comprises a closure panel (232) closing off its bottom and **in that** the drive means (236) consist of cleats, spikes, fingers secured to the panel (232).

13. Machine (100) according to Claim 9, **characterized in that** the drive means (236) consist of a bulb plate forming a bottom closure panel or of a sheet incorporating a grating.

14. Machine (100) according to Claims 10 to 13, **characterized in that** two slots (244) are produced respectively in the two ramps (234) and house two corresponding guide rollers (246) which are held respectively in two longitudinal members (132) that make up part of the chassis of the machine.

15. Machine (100) according to any one of the preceding claims, **characterized in that** the displacement means (200⁽¹⁾, 200⁽³⁾, 200⁽⁴⁾) comprises at least two drivers (230) arranged side by side, the pivot shafts (238) being angularly offset, the displacement means (200⁽¹⁾, 200⁽³⁾, 200⁽⁴⁾) being provided or not provided with a fixed bottom wall (210).

16. Machine (100) according to any one of Claims 1 to 15, **characterized in that** the disintegration and expulsion means comprises a separator (270) able to scratch away at the bale of fodder as it advances, a blower (180) and its shroud (170) able to receive the disintegrated bale of fodder and propel it through a distribution chute (190).

17. Machine (100) according to any one of Claims 1 to 15, **characterized in that** the disintegration and expulsion means comprises a rotor held between two arms arranged, in their working position, in the prolongation of the advancement means (200-200⁽⁴⁾).
